(19) Europäisches Patentamt
European Patent Office
Office européen des brevets

(11) **EP 3 658 953 B1**

(12) **EUROPÄISCHE PATENTSCHRIFT**

(45) Veröffentlichungstag und Bekanntmachung des Hinweises auf die Patenterteilung:
**19.05.2021   Patentblatt 2021/20**

(21) Anmeldenummer: **18732315.9**

(22) Anmeldetag: **14.06.2018**

(51) Int Cl.:
*G01S 13/87* *(2006.01)*   *G01S 13/93* *(2020.01)*

(86) Internationale Anmeldenummer:
**PCT/EP2018/065887**

(87) Internationale Veröffentlichungsnummer:
**WO 2019/020271 (31.01.2019 Gazette 2019/05)**

(54) **VORRICHTUNG UND VERFAHREN ZUM ERKENNEN DER HOEHE EINES OBJEKTS**

DEVICE AND METHOD FOR DETECTING THE HEIGHT OF AN OBJECT

DISPOSITIF ET PROCÉDÉ DE RECONNAISSANCE DE LA HAUTEUR D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2017   DE 102017212868**

(43) Veröffentlichungstag der Anmeldung:
**03.06.2020   Patentblatt 2020/23**

(73) Patentinhaber: **Robert Bosch GmbH**
**70442 Stuttgart (DE)**

(72) Erfinder:
• **OLBRICH, Sebastian**
**71229 Leonberg (DE)**
• **KLENK, Simon**
**71696 Moeglingen (DE)**

(56) Entgegenhaltungen:
**EP-A2- 1 278 076        EP-A2- 2 339 374**
**DE-A1-102005 042 729    DE-A1-102008 038 365**
**DE-A1-102010 044 556    US-A1- 2005 110 620**
**US-A1- 2010 253 596**

EP 3 658 953 B1

**Beschreibung**

Stand der Technik

Die vorliegende Erfindung betrifft eine Vorrichtung und ein Verfahren zum Erkennen einer Position eines Objektes.

Radarsensoren sind heutzutage übliche Mittel zur Messung von Abstand und oftmals auch von Geschwindigkeit relativ zu einem reflektierenden Objekt. Der Einsatzzweck reicht von Anwendungen zur Bewegungsmeldung und Präsenzerkennung wie z.B. bei automatisch spülenden Toiletten, über Anwendungen zur Leitungserkennung in Wänden, bis hin zu abstandsregelnden Kfz-Radarsystemen.

Neuere Funktionen des hochautomatisierten Fahrens benötigen eine Vielzahl an Sensoren, wobei auch Radarsensoren zum Einsatz kommen. Dabei sind Radarsensoren nicht sichtbar hinter den Stoßfängern eines Kfz verbaut und messen die Abstände zu den umgebenden Objekten. Dem Fahrer werden diese Abstände geeignet zur Anzeige gebracht, wobei beispielsweise eine optische oder akustische Anzeige erfolgt. Grundsätzlich wird dabei eine Radarwelle z.B. 24GHz, 77GHz oder 79GHz von einem Sensor ausgesendet und an einem Objekt reflektiert, um anschließend eine Zeitdifferenz zwischen dem Aussenden und einer Ankunft der Radarwelle am Sensor als Maß für den Abstand zu messen. Das Aussenden kann dabei als Puls (z.B. Kurzpulsverfahren), oder auch kontinuierlich (z.B. FMCW-Verfahren, Chirp-Sequence) erfolgen. Die verwendeten Bandbreiten sind dabei zulassungsbedingt relativ zur Grundfrequenz gering (z.B. 1% bis 5% Bandbreite relativ zur Grundfrequenz).

Ein Nachteil von Radarsensoren ist, dass teilweise niedrige Objekte aus Metall (z.B. Gulli-Deckel) eine deutlich stärkere Reflexion verursachen als hohe schwache Objekte (z.B. Besenstil). Für Parkanwendungen ist es jedoch wichtig die Höhe der Objekte zu schätzen. Vor niedrigen und somit überfahrbaren Objekten darf nicht gewarnt werden (z. B. Gulli-Deckel, Cola-Dose). Sobald ein Objekt einen Schaden am Fahrzeug hinzufügen kann, muss vor diesem gewarnt werden. Zunehmend werden Parksensoren auch für weitere Funktionen verwendet, die ein aktives Eingreifen erfordern. So werden solche Sensoren beispielsweise auch für Notbremsfunktionen eingesetzt. Eine Höhenschätzung von Objekten ist bei diesen Funktionen unabdingbar. Auch andere Funktionen mit Radarsensoren erfordern eine sichere Unterscheidung zwischen überfahrbaren und nicht überfahrbaren Objekten.

Aktuell werden nur die Informationen von einzelnen Sensoren zur Höhenschätzung verwendet. Durch zunehmende Automatisierung von Fahrerassistenz-Funktionen erhöht sich ebenfalls die Sensoranzahl in einem Fahrzeug. Zukünftige Fahrzeuge werden bis zu fünf Radarsensoren für die Standard-Radar Funktionen verbaut haben. Darüber hinaus wird z.B. für Parkfunktionen und hochautomatisierte Fahrfunktionen eine weitere Erhöhung der Sensoranzahl benötigt, um Objekte im kompletten Nahbereich eines Fahrzeugs sicher zu detektieren. Diese Mehrzahl an Sensoren kann verwendet werden um eine Objekthöhe zu schätzen. US2010/253596A zeigt eine Vorrichtung und ein Verfahren zum Erkennen einer Position eines Objektes jeweils nach dem Oberbegriff des Anspruchs 1 und nach dem Oberbegriff des Anspruchs 11.

Offenbarung der Erfindung

Die erfindungsgemäße Vorrichtung zum Erkennen einer Position eines Objektes umfasst einen ersten Abstandssensor, welcher eine in einer ersten Sensorebene gelegene erste Sensorachse aufweist, und dazu eingerichtet ist, einen ersten Abstand zwischen dem ersten Abstandssensor und einem Objekt zu erfassen und einen ersten Winkel zu erfassen, der einen Winkel zwischen der ersten Sensorachse und einer Richtung beschreibt, in der das Objekt von dem ersten Abstandssensor aus gelegen ist, wenn das Objekt in der ersten Sensorebene liegt, einen zweiten Abstandssensor, welcher eine in einer zweiten Sensorebene gelegene zweite Sensorachse aufweist, und dazu eingerichtet ist, einen zweiten Abstand zwischen dem zweiten Abstandssensor und dem Objekt zu erfassen, und/oder einen zweiten Winkel zu erfassen, der einen Winkel zwischen der zweiten Sensorachse und einer Richtung beschreibt, in der das Objekt von dem zweiten Abstandssensor aus gelegen ist, wenn das Objekt in der zweiten Sensorebene liegt, wobei zwischen der ersten Sensorachse und der zweiten Sensorachse ein Winkel von mehr als Null Grad vorliegt, und eine Auswerteeinheit, welche dazu eingerichtet ist, basierend auf dem ersten Abstand, dem ersten Winkel und zumindest dem zweiten Abstand und/oder dem zweiten Winkel zu bestimmen, ob das Objekt sich oberhalb oder unterhalb einer vorgegeben Höhe über der ersten Sensorebene befindet.

Das erfindungsgemäße Verfahren zum Erkennen einer Position eines Objektes, mittels eines ersten Abstandssensors, welcher eine in einer ersten Sensorebene gelegene erste Sensorachse aufweist und eines zweiten Abstandssensors, welcher eine in einer zweiten Sensorebene gelegene zweite Sensorachse aufweist, wobei zwischen der ersten Sensorachse und zweiten Sensorachse ein Winkel von mehr als Null Grad vorliegt, umfasst ein Erfassen eines ersten Abstands zwischen dem ersten Abstandssensor und einem Objekt, ein Erfassen eines ersten Winkels, der einen Winkel zwischen der ersten Sensorachse und einer Richtung beschreibt, in der das Objekt von dem ersten Abstandssensor aus gelegen ist, wenn das Objekt in der ersten Sensorebene liegt, ein Erfassen eines zweiten Abstands zwischen dem zweiten Abstandssensor und dem Objekt, und/oder eines zweiten Winkels, der einen Winkel zwischen der zweiten Sensorachse und einer Richtung beschreibt, in der das Objekt von dem zweiten Abstandssensor aus gelegen ist, wenn das Objekt in der zweiten Sensorebene liegt, und ein Bestimmen, basierend auf dem ersten Abstand, dem ersten Winkel und zumindest dem zweiten Abstand und/oder dem zweiten Winkel, ob das Objekt sich oberhalb oder unterhalb einer vorgegeben Höhe über der ersten Sensorebene befindet.

Der erste Abstandssensor und der zweite Abstandssensor weisen eine in einer Sensorebene gelegene Sensorachse auf. Die Sensorebene ist eine Ebene, in welcher der jeweilige Abstandssensor angeordnet ist. Die jeweilige Sensorachse eines Abstandssensors ist eine Achse, welche senkrecht zu einer durch eine primäre Erfassungsrichtung definierten Richtung ist. Insbesondere liegt die jeweilige Sensorachse senkrecht zu der Hauptkeule des jeweiligen Abstandssensors.

Der erste Abstandssensor ist dazu geeignet, einen ersten Winkel zu erfassen, der einen Winkel zwischen der ersten Sensorachse und einer Richtung beschreibt, in der das Objekt von dem ersten Abstandssensor aus gelegen ist, falls das Objekt in der ersten Sensorebene liegt. Dies bedeutet mit anderen Worten, dass der erste Abstandssensor dazu geeignet ist, neben einem Abstand auch eine Richtung zu erfassen, in welcher das Objekt gegenüber dem ersten Abstandssensor liegt. Dabei ist der erste Winkel ein Winkel, welcher die Lage eines Objektes in der Sensorebene korrekt beschreibt. Der erste Abstandssensor ist daher dazu geeignet, die Lage des Objektes in der ersten Sensorebene korrekt zu erfassen. Dabei ist der erste Abstandssensor insbesondere dazu geeignet, lediglich einen einzigen Winkel zu erfassen, welcher die Lage des Objektes gegenüber dem ersten Abstandssensor beschreibt. Liegt das erste Objekt in der ersten Sensorebene, so liegt auch der erste Winkel in der ersten Sensorebene. Der erste Abstandssensor kann somit zumindest in einer Ebene erfassen, in welcher Richtung das Objekt gelegen ist. Ist die erste Sensorebene beispielsweise eine horizontale Ebene, so kann durch den ersten Abstandssensor erfasst werden, ob das Objekt links oder rechts von dem ersten Abstandssensor gelegen ist. Wie weit das Objekt links oder rechts von der ersten Sensorachse liegt, wird durch den ersten Winkel beschrieben. Liegt das Objekt außerhalb der ersten Sensorebene, so wird dieses Objekt dennoch durch den ersten Abstandssensor erfasst und es wird von diesem ein Messwert für den ersten Winkel ausgegeben, der dann nicht mehr in der Sensorebene liegt

Die voranstehenden Ausführungen zum ersten Abstandssensor gelten in gleicher Weise für den zweiten Abstandssensor. Es wird somit ermöglicht, dass eine Position oder Abweichung eines Objektes außerhalb der ersten oder zweiten Sensorebene erkannt wird, ohne dass einer der Abstandssensoren alleine dazu eingerichtet ist, diese Abweichung von der ersten Sensorebene oder der zweiten Sensorebene direkt zu messen. So sind beispielsweise beide Abstandssensoren jeweils dazu geeignet, zu erfassen, ob das Objekt links oder rechts von dem jeweiligen Abstandssensor gelegen ist. Insbesondere ist jedoch keiner der beiden Abstandssensoren dazu geeignet, zu messen, ob das Objekt oberhalb oder unterhalb der jeweiligen Sensorebene liegt.

Zwischen der ersten Sensorachse und der zweiten Sensorachse liegt ein Winkel von mehr als 0°, bevorzugt mehr als 1°, weiter bevorzugt von mehr als 5°, vor. Dies bedeutet mit anderen Worten, dass der erste Abstandssensor und der zweite Abstandssensor zueinander verkippt sind. Der Winkel, um den der erste Abstandssensor gegenüber dem zweiten Abstandssensor verkippt ist, also der Winkel zwischen der ersten Sensorachse und der zweiten Sensorachse, liegt dabei in der ersten oder in der zweiten Sensorebene. Der erste Abstand und der zweite Abstand beschreiben jeweils eine gemessene Distanz zwischen einem der Abstandssensoren und dem Objekt.

Es werden somit die Informationen mehrerer Sensoren für eine Höhenklassifizierung verwendet. Dies ist schon daher vorteilhaft, da zunehmend mehrere Sensoren an einem Fahrzeug angeordnet werden. So ist das erfindungsgemäße Verfahren vorteilhaft an einem aktuellen Fahrzeug implementierbar. So werden z. B. bei Parkfunktionen pro Stoßfänger bis zu sechs Ultraschallsensoren verbaut. Um die Parkfunktion mit Radarsensoren zu realisieren, werden ebenfalls mehrere Sensoren benötigt. Auch Funktionen wie das hochautomatisierte Fahren benötigen mehrere Abstandssensoren, um den kompletten Bereich um das Fahrzeug abzudecken.

Aktuelle Abstandssensoren, insbesondere Radarsensoren, können neben Relativgeschwindigkeit und Abstand oftmals auch direkt einen horizontalen Winkel bestimmen. Das bedeutet, die Abstandssensoren können einen Winkel in einer Sensorebene bestimmen. Ob der in einer Sensorebene gelegene Winkel ein horizontaler Winkel ist, hängt dabei davon ab, wie der jeweilige Abstandssensor ausgerichtet ist. Dadurch, dass sich die Sichtbereiche einzelner Abstandssensoren überlagern, werden Objekte von mehreren Sensoren detektiert. Es kann somit sowohl durch einen einzelnen Abstandssensor, als auch über eine Trilateration der Signale mehrerer Abstandssensoren die Position eines Objektes bestimmt werden. Durch diese Überbestimmtheit kann erkannt werden, ob es sich um ein hohes oder niedriges Objekt handelt. Ferner kann durch diese Überbestimmtheit und durch Lösen einer Gleichung der unbekannte Elevationswinkel bestimmt werden. Dies erfolgt dadurch, dass bestimmt wird, ob das Objekt sich oberhalb oder unterhalb einer vorgegebenen Höhe über der ersten Sensorebene befindet. Eine Definition, ob ein Objekt hoch oder niedrig ist, ist dabei abhängig von der Anordnung der ersten Sensorebene gegenüber einer Bezugsfläche, beispielsweise einer Fahrbahnoberfläche. Unabhängig von der Anordnung der Vorrichtung, beispielsweise an einem Fahrzeug, wird daher zunächst eine Höhe über der ersten Sensorebene bewertet. Eine Höhe ist dabei ein kürzester Abstand zwischen dem Objekt und der ersten Sensorebene.

Es wird somit ermöglicht, eine Position eines Objektes mittels mehrerer einzelner Abstandssensoren zu erkennen, wobei auf Abstandssensoren zurückgegriffen werden kann, welche lediglich dazu geeignet sind, eine Lage eines Objektes in einer Ebene zu erkennen.

Es ist offensichtlich, dass die Lage eines Objektes durch eine direkte Messung eines einzelnen Abstandssensors erfasst werden kann, wenn der erste oder zweite Abstandssensor dazu geeignet ist mehr als einen einzigen Winkel zu erfassen. Jedoch ist das erfindungsgemäße Erkennen einer Position eines Objektes, insbesondere das Erkennen ob dieses sich in einer bestimmten Höhe über der ersten Sensorebenen befindet, auch für solche Abstandssensoren vorteilhaft, da eine besonders zuverlässige Erkennung ermöglicht wird, welche insbesondere auch als Verifizierung einer direkten Messung dienen kann.

Das Verfahren und die Vorrichtung sind des Weiteren vorteilhaft, da die notwendigen Abstandssensoren zumeist an aktuellen Fahrzeugen bereits vorhanden sind.

Die Unteransprüche zeigen bevorzugte Weiterbildungen der Erfindung.

Bevorzugt ist die Auswerteeinheit dazu eingerichtet, basierend auf dem ersten Abstand und dem ersten Winkel einen ersten Vergleichswert zu errechnen, welcher einen Wert beschreibt, der dem zweiten Abstand entspricht, wenn das Objekt sich in einer vorgegebene Höhe über der ersten Sensorebene befindet, und einen Vergleich zwischen dem zweiten Abstand mit dem ersten Vergleichswert auszuführen, um zu bestimmen, ob das Objekt sich oberhalb oder unterhalb der vorgegeben Höhe über der ersten Sensorebene befindet, oder basierend auf dem ersten Abstand und dem ersten Winkel einen zweiten Vergleichswert zu errechnen, welcher einen Wert beschreibt, der dem zweiten Winkel entspricht, wenn das Objekt sich in einer vorgegebene Höhe über der ersten Sensorebene befindet, und einen Vergleich zwischen dem zweiten Winkel mit dem zweiten Vergleichswert auszuführen, um zu bestimmen, ob das Objekt sich oberhalb oder unterhalb der vorgegeben Höhe über der ersten Sensorebene befindet. Durch ein solches Ermitteln von Vergleichswerten kann eine schnelle Auswertung hinsichtlich einer Höhe des Objektes erfolgen. Dabei ist es nicht notwendig ein aufwendiges Gleichungssystem zu lösen und eine Höhe des Objektes exakt zu ermitteln. Eine Höhenabschätzung mittels des Vergleichswertes kann ausreichend sein, um beispielsweise zu bestimmen, ob ein Objekt ein Hindernis darstellt oder nicht.

Bevorzugt wird der erste Vergleichswert basierend auf dem ersten Abstand, dem ersten Winkel und dem zweiten Winkel berechnet und der zweite Vergleichswert basierend auf dem ersten Abstand, dem zweiten Abstand und dem ersten Winkel berechnet. Diese Werte stehen gerade dann ohnehin zur Verfügung, wenn der erste und der zweite Abstandssensor baugleiche Sensoren sind. Somit kann der erste und zweite Vergleichswert besonders präzise und einfach ermittelt werden.

Auch ist es vorteilhaft, wenn die erste Sensorebene und die zweite Sensorebene parallele Ebenen sind. Die Position des Objektes kann somit in der ersten Sensorebene besonders genau bestimmt werden.

Ferner ist es vorteilhaft, wenn die erste Sensorebene und die zweite Sensorebene identische Ebenen sind. Es kann somit aus einer einzigen Ebene heraus geschlossen werden, wie hoch oder tief ein Objekt gegenüber dieser gemeinsamen Ebene angeordnet ist.

Ferner ist es vorteilhaft, wenn die erste Sensorebene und/oder die zweite Sensorebene horizontale Ebenen sind. Das bedeutet, dass der erste Abstandssensor und der zweite Abstandssensor derart angeordnet sind, dass die Ausrichtung der ersten Sensorebene und/oder der zweiten Sensorebene horizontal ist. Dazu ist der erste Abstandssensor und der zweite Abstandssensor bevorzugt an einem Fahrzeug angeordnet.

Auch ist es vorteilhaft, wenn die Vorrichtung ferner einen dritten Abstandssensor umfasst, welcher eine in einer dritten Sensorebene gelegene dritte Sensorachse aufweist, und dazu geeignet ist, einen dritten Abstand zwischen dem ersten Abstandssensor und dem Objekt zu erfassen, wobei die Auswerteeinheit dazu eingerichtet ist, basierend auf dem dritten Abstand zu validieren, ob korrekt bestimmt wurde, ob sich das Objekt oberhalb oder unterhalb der vorgegebenen Höhe über der ersten Sensorebene befindet. Die Zuverlässigkeit der erkannten Position des Objektes wird somit erhöht.

Bevorzugt umfasst die Vorrichtung zum Erkennen einer Position eines Objektes einen dritten Abstandssensor, welcher eine in einer dritten Sensorebene gelegene dritte Sensorachse aufweist, wobei die dritte Sensorebene ungleich der ersten Sensorebene und zweiten Sensorebene ist, und dazu eingerichtet ist, einen dritten Abstand zwischen dem ersten Abstandssensor und dem Objekt zu erfassen, und/oder einen dritten Winkel zu erfassen, der einen Winkel zwischen der dritten Sensorachse und einer Richtung beschreibt, in der das Objekt von dem dritten Abstandssensor aus gelegen ist, wenn das Objekt in der dritten Sensorebene liegt, wobei die Auswerteeinheit dazu eingerichtet ist basierend auf dem dritten Abstand und oder dem dritten Winkel zu ermitteln, ob das Objekt sich oberhalb oder unterhalb der ersten oder zweiten Sensorebene befindet. Auf diese Weise kann vermieden werden, dass ein hoch gelegenes Objekt als ein niedrig gelegenes Objekt interpretiert wird.

Bevorzugt wird der erste und zweite Vergleichswert basierend auf einer Tabelle ermittelt. Es ist somit nicht weiter notwendig, den Vergleichswert beständig neu zu errechnen. Lediglich eine Kombination der dem jeweiligen Vergleichswert zugrundeliegenden Parameter muss in der Tabelle identifiziert werden, um den ersten oder zweiten Vergleichswert zu bestimmen.

Ferner ist es vorteilhaft, wenn der Vergleichswert basierend auf einem vordefinierten Abstand zwischen dem ersten Abstandssensor und dem zweiten Abstandssensor ermittelt wird. Dadurch, dass der Abstand vordefiniert ist, ist es nicht notwendig weitere Messungen auszuführen, um den Abstand zwischen dem ersten Abstandssensor und dem zweiten Abstandssensor zu ermitteln.

Weiter bevorzugt ist der erste Abstandssensor und/oder der zweite Abstandssensor ein Radarsensor, ein akustischer Sensor oder ein optischer Sensor. Dabei sind der erste Abstandssensor und der zweite Abstandssensor unterschiedliche oder gleiche Typen von Sensoren. Die zuvor genannten Abstandssensoren sind kostengünstig zu beziehen und weisen eine hinreichende Genauigkeit auf, um das Erkennen der Position des Objektes gegenüber der ersten Sensorebene zuverlässig zu ermöglichen.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1     eine Darstellung eines ersten Abstandssensors in einer ersten Sensorebene und einer in der ersten Sensorebene gelegenen ersten Sensorachse,

Figur 2     eine Darstellung eines zweiten Abstandssensors in einer zweiten Sensorebene und einer in der zweiten Sensorebene gelegenen zweiten Sensorachse,

Figur 3     eine Darstellung einer Anordnung einer erfindungsgemäßen Vorrichtung an einem Fahrzeug,

Figur 4     ein Sensorkoordinatensystem zur Definition verschiedener Winkel im dreidimensionalem Raum gegenüber einem der Abstandssensoren,

Figur 5     ein globales Koordinatensystem, in welchem der erste und der zweite Abstandssensor dargestellt ist,

Figur 6     eine Darstellung des ersten Abstandssensors mit zugehörigen möglichen Aufenthaltspunkten eines Objektes,

Figur 7     eine Darstellung der Vorrichtung zum Erkennen einer Position eines Objektes für einen Fall, in dem sich das Objekt in der ersten Sensorebene befindet,

Figur 8     eine Darstellung der Vorrichtung zum Erkennen einer Position eines Objektes in einem Zustand, in dem sich das Objekt über oder unter der ersten Sensorebene befindet, und

Figur 9     eine Darstellung, welche die Anordnung des ersten Abstandssensor und des zweiten Abstandssensor über einer Fahrbahnoberfläche zeigt.

Ausführungsformen der Erfindung

Die erfindungsgemäße Vorrichtung zum Erkennen einer Position eines Objektes 5 umfasst einen ersten Abstandssensor 1, einen zweiten Abstandssensor 6 und eine Auswerteeinheit 10.

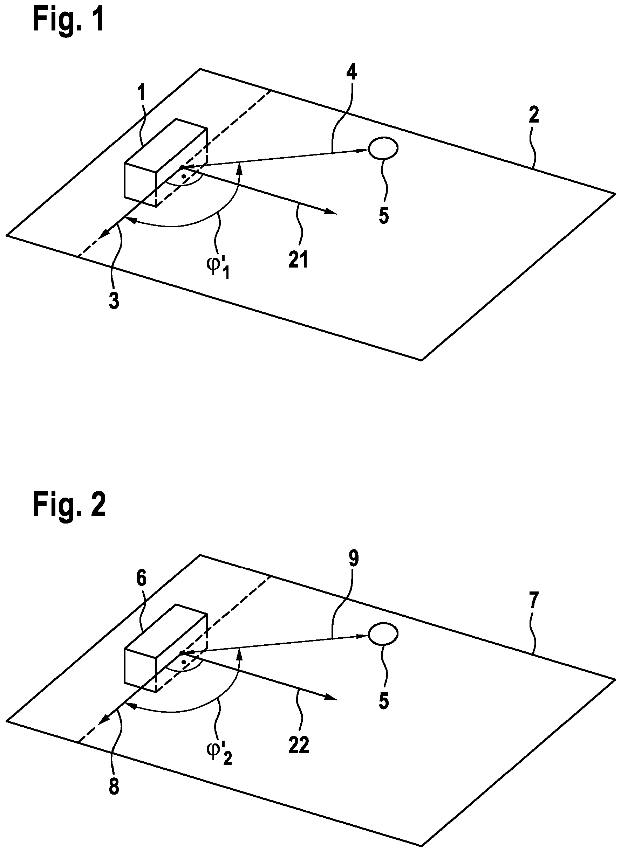

Der erste Abstandssensor 1 ist schematisch in Figur 1 dargestellt. Der erste Abstandssensor 1 weist eine erste Sensorachse 3 auf, welche in einer ersten Sensorebene 2 gelegen ist. Die erste Sensorebene 2 und die erste Sensorachse 3 sind dabei keine physikalischen Elemente, sondern beschreiben lediglich Eigenschaften des ersten Abstandssensors 1. Der erste Abstandssensor 1 ist beispielsweise ein akustischer Sensor, ein optischer Sensor oder ein Radarsensor. Die erste Sensorebene 2 ist eine Ebene, in welcher der erste Abstandssensor 1 gelegen ist. Der erste Abstandssensor 1 weist eine Hauptkeule auf, welche entlang einer Hauptabstrahlachse 21 des ersten Abstandssensors 1 gerichtet ist. Die erste Sensorachse 3 steht senkrecht auf der Hauptabstrahlachse 21.

Der erste Abstandssensor 1 ist dazu eingerichtet, einen ersten Abstand 4 zwischen dem ersten Abstandssensor 1 und einem Objekt 5 zu erfassen. Das Objekt 5 ist ebenfalls beispielhaft in Figur 1 dargestellt und liegt dabei in der ersten Sensorebene 2. Durch den ersten Abstandssensor 1 wird ein Signal ausgesandt und dessen Reflexion empfangen. Aus einer Laufzeit des Signals wird der erste Abstand 4 zwischen dem Objekt 5 und dem ersten Abstandssensor 1 ermittelt.

Der erste Abstandssensor 1 ist ferner dazu eingerichtet, einen ersten Winkel $\varphi_1'$ zu erfassen, der einen Winkel zwischen der ersten Sensorachse 3 und einer Richtung beschreibt, in der das Objekt 5 von dem ersten Abstandssensor 1 aus gelegen ist. Der erste Winkel $\varphi_1'$ ist beispielsweise ein Winkel zwischen der ersten Sensorachse 3 und einer Geraden, welche das Objekt 5 mit dem ersten Abstandssensor 1 verbindet. Der erste Abstandssensor 1 ist somit dazu geeignet zu ermitteln, ob das Objekt 5 von dem ersten Abstandssensor 1 aus gesehen links oder rechts von der Hauptabstrahlachse 21 des ersten Abstandssensors 1 liegt. Der erste Abstandssensor 1 ist in dieser ersten Ausführungsform nicht dazu geeignet, zu ermitteln, ob das Objekt 5 über oder unter der ersten Sensorebene 2 liegt. Da das Signal von dem ersten Abstandssensor 1 jedoch nicht nur in der ersten Sensorebene ausgestrahlt wird, wird ein ausgesandtes Signal auch dann von dem Objekt 5 zurückgeworfen, wenn das Objekt 5 nicht in der ersten Sensorebene 2 liegt. Da der erste Abstand 4 basierend auf der Laufzeit des Signals ermittelt wird, wird somit auch dann ein korrekter Wert für den ersten Abstand 4 ermittelt, wenn das Objekt 5 nicht in der ersten Sensorebene 2 liegt.

Der zweite Abstandssensor 6 ist schematisch in Figur 2 dargestellt. Der zweite Abstandssensor 6 weist eine zweite Sensorachse 8 auf, welche in einer zweiten Sensorebene 7 gelegen ist. Die zweite Sensorebene 7 und die zweite Sensorachse 8 sind dabei keine physikalischen Elemente, sondern beschreiben lediglich Eigenschaften des zweiten Abstandssensors 6. Der zweite Abstandssensor 6 ist beispielsweise ein akustischer Sensor, ein optischer Sensor oder ein Radarsensor. Die zweite Sensorebene 7 ist eine Ebene, in welcher der zweite Abstandssensor 6 gelegen ist. Der zweite Abstandssensor 6 weist eine Hauptkeule auf, welche entlang einer Hauptabstrahlachse 22 des zweiten Abstandssensors 6 gerichtet ist. Die zweite Sensorachse 8 steht senkrecht auf der Hauptabstrahlachse.

Der zweite Abstandssensor 6 ist dazu eingerichtet, einen zweiten Abstand 9 zwischen dem zweiten Abstandssensor 6 und dem Objekt 5 zu erfassen. Das Objekt 5 ist ebenfalls beispielhaft in Figur 2 dargestellt und liegt dabei in der zweiten Sensorebene 7. Durch den zweiten Abstandssensor 6 wird ein Signal ausgesandt und dessen Reflexion empfangen. Aus der Laufzeit des Signals wird der zweite Abstand 9 zwischen dem Objekt 5 und dem zweiten Abstandssensor 6 ermittelt.

Der zweite Abstandssensor 6 ist ferner dazu eingerichtet, einen zweiten Winkel $\varphi_2$' zu erfassen, der einen Winkel zwischen der zweiten Sensorachse 8 und einer Richtung beschreibt, in der das Objekt 5 von dem zweiten Abstandssensor 6 aus gelegen ist. Der zweite Winkel $\varphi_2$' ist beispielsweise ein Winkel zwischen der zweiten Sensorachse 8 und einer Geraden, welche das Objekt 5 mit dem zweiten Abstandssensor 6 verbindet. Der zweite Abstandssensor 6 ist somit dazu geeignet zu ermitteln, ob das Objekt 5 von dem zweiten Abstandssensor 6 aus gesehen links oder rechts von der Hauptabstrahlachse 22 des zweiten Abstandssensors 6 liegt. Der zweite Abstandssensor 6 ist in dieser ersten Ausführungsform nicht dazu geeignet, zu ermitteln, ob das Objekt 5 über oder unter der zweiten Sensorebene 7 liegt. Da das Signal von dem zweiten Abstandssensor 6 jedoch nicht nur in der zweiten Sensorebene 7 ausgestrahlt wird, wird ein ausgesandtes Signal auch dann von dem Objekt 5 zurückgeworfen, wenn das Objekt 5 nicht in der zweiten Sensorebene 7 liegt. Da der zweite Abstand 9 basierend auf der Laufzeit des Signals ermittelt wird, wird somit auch dann ein korrekter Wert für den zweiten Abstand 9 ermittelt, wenn das Objekt 5 nicht in der ersten Sensorebene 2 liegt.

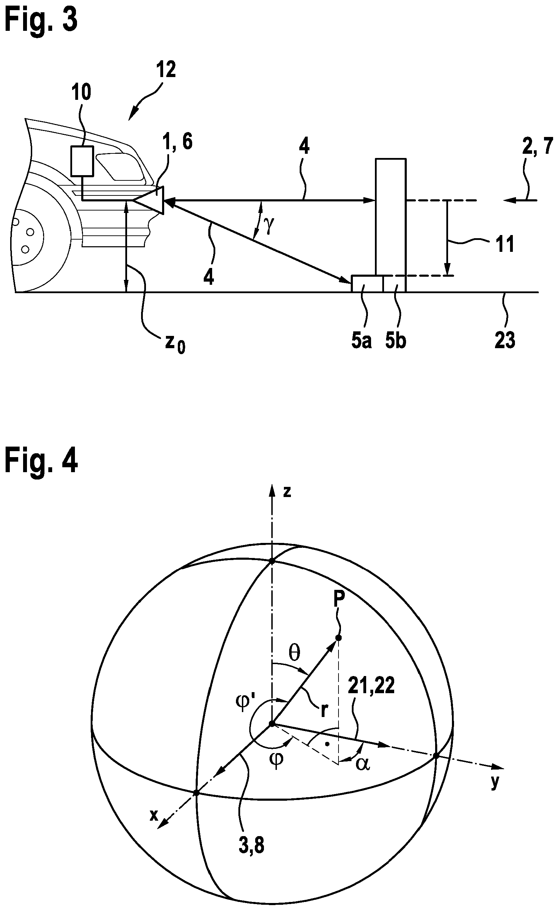

Figur 3 zeigt ein Fahrzeug 12, an welchem die erfindungsgemäße Vorrichtung zum Erkennen einer Position eines Objektes 5 angeordnet ist. Dabei ist in Figur 3 links eine Fahrzeugfront des Fahrzeuges 12 dargestellt. Im Bereich der Stoßstange des Fahrzeuges 12 sind der erste Abstandssensor 1 und der zweite Abstandssensor 6 angeordnet. In der in Figur 3 dargestellten Ansicht sind der erste Abstandssensor 1 und der zweite Abstandssensor 6 aus Sicht des Betrachters hintereinander angeordnet.

Der erste Abstandssensor 1 und der zweite Abstandssensor 6 sind mit der Auswerteeinheit 10 verbunden. Die Auswerteeinheit 10 ist eine Recheneinheit, welche dazu geeignet ist, die Ausgangssignale des ersten Abstandssensors 1 und des zweiten Abstandssensor 6 zu verarbeiten. Von dem ersten Abstandssensor 1 wird somit der erste Abstand 4 und der erste Winkel $\varphi_1$' zu der Auswerteeinheit 10 übertragen. Von dem zweiten Abstandssensor 6 wird somit der zweite Abstand 9 und der zweite Winkel $\varphi_2$' zu der Auswerteeinheit 10 übertragen. Vor dem Fahrzeug 12 ist in Figur 3 das Objekt 5 dargestellt. Das Objekt 5 ist dabei beispielsweise ein erstes Objekt 5a, welches eine geringe Höhe über einer Fahrbahnoberfläche aufweist, auf welcher sich das Fahrzeug 12 befindet. Das Objekt 5 ist ferner beispielhaft als ein zweites Objekt 5b dargestellt, welches sich deutlich weiter über die Fahrbahnoberfläche erhebt als das erste Objekt 5a. Für beide beispielhaften Objekte 5a, 5b ist der erste Abstand 4 dargestellt. Dieser ist sowohl für das erste Objekt 5a als auch für das zweite Objekt 5b identisch. Es ist dennoch ersichtlich, dass sich das erste Objekt 5a näher an dem Fahrzeug 12 befindet als das zweite Objekt 5b.

Die erste Sensorebene 2 ist in Figur 3 eine horizontale Ebene. Die zweite Sensorebene 7 ist ebenfalls eine horizontale Ebene und entspricht der ersten Sensorebene 2. Da das Fahrzeug 12 in Figur 3 in einer Seitenansicht dargestellt ist, sind die erste Sensorebene 2 und die zweite Sensorebene 7 lediglich in einer Schnittlinie erkenntlich. Wie zuvor beschrieben, sind der erste Abstandssensor 1 und der zweite Abstandssensor 6 dazu geeignet einen Winkel, also den ersten Winkel $\varphi_1$' und den zweiten Winkel $\varphi_2$', in der ersten Sensorebene 2 und der zweiten Sensorebene 7 zu erfassen. Der in Figur 3 dargestellte Winkel $\gamma$, welcher nötig wäre, um das erste Objekt 5a von dem zweiten Objekt 5b, also ein niedriges von einem hohen Objekt zu unterscheiden, kann nicht von einem einzelnen der Abstandssensoren 1, 6 alleine gemessen werden.

Um eine solche Unterscheidung von niedrigen und hohen Objekt 5a, 5b zu ermöglichen und somit die Position des Objektes 5 zu erkennen, ist die Auswerteeinheit 10 dazu eingerichtet, einen Vergleichswert zu errechnen, welcher kontinuierlich mit einem Messwert des zweiten Abstandssensors 6 verglichen wird. Dabei wird daraus, ob der Messwert

des zweiten Abstandssensors 6 größer oder kleiner als der Vergleichswert ist, erkannt, ob ein niedriges oder hohes Objekt 5a, 5b vorliegt, also ob sich das Objekt 5 mehr oder weniger als eine vorgegebenen Höhe 11 über der ersten Sensorebene 2 befindet.

Die vorgegebene Höhe 11 ist ein Abstand des Objektes 5 zu der ersten Sensorebene 2. Dies ist ebenfalls in Figur 3 dargestellt. So ist in Figur 3 beispielhaft die vorgegeben Höhe 11 dargestellt, welche einen Abstand des niedrigen Objektes 5a zu der Sensorebene 2 beschreibt. Je weiter das Objekt 5 von der ersten Sensorebene 2 entfernt ist, desto größer ist der Abstand des Objektes 5 zu der ersten Sensorebene 2. Der Abstand des Objektes 5 zu der ersten Sensorebene 2, durch welchen die vorgegebene Höhe 11 definiert ist, ist nicht zu verwechseln mit der Höhe des Objektes 5, welche eine Höhe des Objektes 5 über einer Fahrbahnoberfläche 23 beschreibt. Ausgehend von der Fahrbahnoberfläche 23 nimmt die Höhe eines Objektes 5 weiter zu, wobei gleichzeitig der Abstand zu der ersten Sensorebene 2 abnimmt, bis das Objekt 5 in der ersten Sensorebene 2 liegt. Die vorgegebene Höhe 11 beschreibt einen Abstand des Objektes 5 von der ersten Sensorebene 2. Die vorgegebene Höhe 11 sei der Einfachheit halber gleich 0. Das heißt, es wird durch die Auswerteeinheit 10 geprüft, ob das Objekt 5 sich in der ersten Sensorebene 2 befindet. Würde die vorgegebene Höhe 11 zu einem Wert von 5 cm gewählt, so würde geprüft, ob das Objekt 5 mehr als 5 cm unter der ersten Sensorebene 2 liegt.

Um zu bestimmen, ob das Objekt 5 sich mehr oder weniger als die vorgegebene Höhe 11 über der ersten Sensorebene 2 befindet, wird von der Auswerteeinheit 10 entweder ein erster Vergleichswert oder ein zweiter Vergleichswert errechnet. Das Errechnen des ersten Vergleichswerts und das Errechnen des zweiten Vergleichswerts basiert dabei auf demselben mathematischen Prinzip, wobei jedoch unterschiedliche Parameter für einen folgenden Vergleich genutzt werden.

So wird der erste Vergleichswert basierend auf dem ersten Abstand 4, dem ersten Winkel $\varphi_1$' und dem zweiten Winkel $\varphi_2$' errechnet. Der erste Vergleichswert beschreibt einen Wert, der dem zweiten Abstand 9 entspricht, wenn das Objekt 5 sich in einer vorgegebenen Höhe 11 über der ersten Sensorebene 2 befindet. Entsprechend erfolgt ein Vergleich zwischen dem durch den zweiten Abstandsensor 6 erfassten zweiten Abstand 9 mit dem ersten Vergleichswert, um zu bestimmen, ob das Objekt 5 sich oberhalb oder unterhalb der vorgegeben Höhe 11 über der ersten Sensorebene 2 befindet.

Wird der zweite Vergleichswert errechnet, so wird dieser basierend auf dem ersten Abstand 4, dem zweiten Abstand 9 und dem ersten Winkel $\varphi_1$' berechnet. Der zweite Vergleichswert beschreibt einen Wert, der dem zweiten Winkel $\varphi_2$' entspricht, wenn das Objekt 5 sich in einer vorgegebenen Höhe 11 über der ersten Sensorebene 2 befindet. Entsprechend erfolgt in diesem Falle ein Vergleich zwischen dem durch den zweiten Abstandsensor 6 erfassten zweiten Winkel $\varphi_2$' mit dem zweiten Vergleichswert, um zu bestimmen, ob das Objekt 5 sich oberhalb oder unterhalb der vorgegeben Höhe 11 über der ersten Sensorebene 2 befindet.

Um das dem ersten und zweiten Vergleichswert zugrundeliegende Prinzip zu beschreiben wird zunächst auf Figur 4 verwiesen, welche ein Sensorkoordinatensystem eines der Abstandsensoren 1, 6 darstellt. Im Zentrum des dargestellten Sensorkoordinatensystems ist wahlweise der erste oder der zweite Abstandsensor 1, 6 angeordnet. Die xy-Ebene des Sensorkoordinatensystems stellt die dem jeweiligen Abstandsensor 1, 6 zugehörige Sensorebene 2, 7 dar. Die Sensorachse 3, 8 des jeweiligen Abstandsensors 1, 6 erstreckt sich entlang der in Figur 4 dargestellten x-Achse. Die y-Achse entspricht der Hauptabstrahlachse 21, 22 des jeweiligen Abstandsensors 1, 6. Wird im Folgenden auf einen der in Figur 4 dargestellten Winkel Bezug genommen, so ist dieser mit dem Index "1" gekennzeichnet, wenn dieser dem ersten Abstandsensor 1 zugehörig ist, und ist mit dem Index "2" gekennzeichnet, wenn dieser dem zweiten Abstandsensor 6 zugehörig ist. So ist der erste Winkel $\varphi_1$, der in Figur 4 dargestellte Winkel $\varphi$', welcher dem ersten Abstandsensor 1 zugehörig ist. Entsprechend ist der zweite Winkel $\varphi_2$' der in Figur 4 dargestellte Winkel $\varphi$', welcher dem zweiten Abstandsensor 6 zugehörig ist..

In Figur 4 ist ein Punkt P dargestellt, welcher einen beispielhaften Aufenthaltsort des Objektes 5 darstellt. Ein Abstand r zwischen dem jeweiligen Abstandsensor 1, 6, also dem Ursprung des dargestellten Sensorkoordinatensystems, und dem Punkt P entspricht dem durch den Abstandsensor 1, 6 erfassten Abstand, also dem ersten Abstand 4 oder dem zweiten Abstand 9.

Sowohl der erste Abstandsensor 1 als auch der zweite Abstandsensor 6 sind dazu eingerichtet, einen Winkel $\varphi$ zu erfassen, welcher eine Richtung beschreibt, in der das Objekt 5 von dem ersten Abstandsensor 1 aus gelegen ist, wenn das Objekt 5 in der ersten Sensorebene 2 liegt. Für eine Auswertung des von einem der Abstandsensoren 1, 6 erfassten Winkels $\varphi$ ist jedoch zu beachten, dass die Abstandsensoren 1, 6 auch dann einen Messwert für den Winkel $\varphi$' ausgeben, wenn das Objekt 5 nicht in der Sensorebene 2, 7 liegt. Dies liegt unter Anderem darin begründet, dass ein von den Abstandsensoren 1, 6 ausgesendetes Signal nicht scharf begrenzt ist und damit in jedem Fall auch außerhalb der Sensorebene reflektiert werden und zu dem aussendenden Abstandsensor 1, 6 zurück reflektiert werden kann. Daher wird tatsächlich von den Abstandsensoren 1, 6 der Winkel $\varphi$' erfasst, auch wenn die Abstandsensoren 1,6 dazu ausgelegt sind, lediglich einen Winkel $\varphi$ in der zugehörigen Sensorebene 2, 7 zu erfassen.

In Figur 4 sind die Winkel $\varphi$ und $\varphi$' zu der Sensorachse (x-Achse) definiert. Der Winkel $\theta$ ist zur z-Achse definiert. Der Punkt P hat folgende Koordinaten in dem Sensorkoordinatensystem:

$$x_P = cos(\varphi) \cdot sin(\theta) \cdot r = cos(\varphi') \cdot r$$

$$\varphi = cos^{-1}\left(\frac{cos(\varphi')}{sin(\theta)}\right)$$

$$y_P = sin(\varphi) \cdot sin(\theta) \cdot r = sin\left(cos^{-1}\left(\frac{cos(\varphi')}{sin(\theta)}\right)\right) \cdot sin(\theta) \cdot r$$

$$z_P = cos(\theta) \cdot r$$

Dabei gilt:

$$90° - \varphi' \leq \theta \leq 90° + \varphi' \text{ und } 90° - \theta \leq \varphi' \leq 90° + \theta, \text{ für } y \geq 0.$$

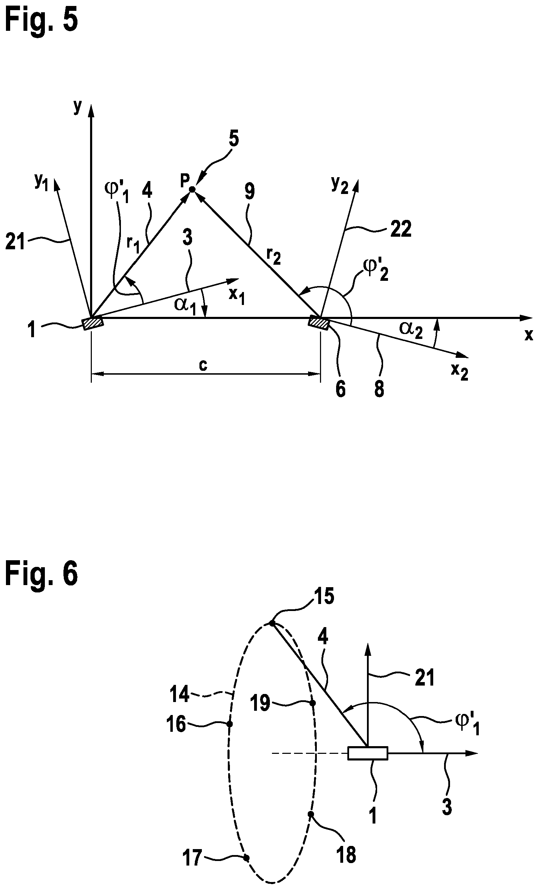

In Figur 5 sind der erste Abstandssensor 1 und der zweite Abstandssensor 6 in einem globalen Koordinatensystem dargestellt. Für die beiden Abstandssensoren 1, 6 sind dazu die zugehörigen Winkel jeweils gemäß dem in Figur 4 dargestellten Sensorkoordinatensystem abgebildet. Daher ist für jeden der Abstandssensoren 1, 6 die x-Achse und die y-Achse gemäß dem aus Figur 4 bekannten Sensorkoordinatensystem abgebildet. Der erste Abstandssensor 1 und der zweite Abstandssensor 6 liegen in einer gemeinsamen Sensorebene, welche in Figur 5 dargestellt ist. Dabei liegt zwischen der ersten Sensorachse 3 und der zweiten Sensorachse 8 ein Winkel von mehr als Null Grad, bevorzugt von mehr als 1 Grad oder mehr als 5 Grad, vor. Das bedeutet, dass der erste Abstandssensor 1 und der zweite Abstandssensor 6 in der Sensorebene zueinander verkippt sind. Dazu ist der ersten Abstandssensor 1 derart an dem Fahrzeug 12 angeordnet, dass zwischen der x-Achse des globalen Koordinatensystems und der ersten Sensorachse 3 ein erster Kippwinkel $\alpha_1$ von mehr als 0 Grad vorliegt. Gleichzeitig ist der zweite Abstandssensor 6 derart angeordnet, dass zwischen der x-Achse des globalen Koordinatensystems und der zweiten Sensorachse 7 ein zweiter Kippwinkel $\alpha_2$ von mehr als 0 Grad vorliegt. Dabei ist der erste Kippwinkel $\alpha_1$ ungleich dem zweiten Kippwinkel $\alpha_2$ multipliziert mit -1.

Der erste Abstandssensor 1 und der zweite Abstandssensor 6 weisen einen Abstand zueinander auf, welcher als Sensorabstand c bezeichnet wird. Dieser entspricht einem x-Wert des in Figur 5 dargestellten globalen Koordinatenssystems, welcher auch als $x_{Sensor2}$ bezeichnet wird. Der Sensorabstand c ist von einer Montageposition des ersten Abstandssensor 1 und des zweiten Abstandssensor 6 abhängig und wird der Auswerteeinheit 10 bei einer anfänglichen Konfiguration vorgegeben. Der Sensorabstand c ist somit ein vordefinierter Abstand zwischen dem ersten Abstandssensor 1 und dem zweiten Abstandssensor 6. Die Montageposition des ersten Abstandssensors 1 und des zweiten Abstandssensor 6 an dem Fahrzeug 12 ist dabei so gewählt, dass die beiden Abstandssensoren 1, 6 in einer Sensorhöhe zo über der Fahrbahnoberfläche 23 angeordnet sind.

Für das in Figur 5 dargestellte globale Koordinatensystem gilt für eine Koordinatentransformation mit Drehung im Gegenuhrzeigersinn (mathematisch positiver Drehsinn):

$$x_P' = x_P \cdot cos(\alpha) + y_P \cdot sin(\alpha)$$

$$y_P' = -x_P \cdot sin(\alpha) + y_P \cdot cos(\alpha)$$

$$z_P' = z_P$$

Es ergeben sich folgende Gleichungen mit den unbekannten Höhenwinkeln $\theta_1$ und $\theta_2$, welche durch das Lösen des Gleichungssystems exakt bestimmt bzw. durch Vergleichen mit einer Tabelle geschätzt werden können. Für das in Figur 5 dargestellte globale Koordinatensystem ergibt sich daher folgendes globales Gleichungssystem:

$$x'_P = cos(\varphi'_1) \cdot r_1 cos(\alpha_1) - sin\left(cos^{-1}\left(\frac{cos(\varphi'_1)}{sin(\theta_1)}\right)\right) sin(\theta_1) \cdot r_1 sin(\alpha_1)$$

$$= cos(\varphi'_2) \cdot r_2 cos(\alpha_2) + sin\left(cos^{-1}\left(\frac{cos(\varphi'_2)}{sin(\theta_2)}\right)\right) sin(\theta_2) \cdot r_2 sin(\alpha_2) + c$$

$$y'_P = cos(\varphi'_1) \cdot r_1 sin(\alpha_1) + sin\left(cos^{-1}\left(\frac{cos(\varphi'_1)}{sin(\theta_1)}\right)\right) sin(\theta_1) \cdot r_1 cos(\alpha_1)$$

$$= -cos(\varphi'_2) \cdot r_2 sin(\alpha_2) + sin\left(cos^{-1}\left(\frac{cos(\varphi'_2)}{sin(\theta_2)}\right)\right) sin(\theta_2) \cdot r_2 cos(\alpha_2)$$

$$z'_P = cos(\theta_1) \cdot r_1 = cos(\theta_2) \cdot r_2$$

Wie aus Figur 4 ersichtlich ist, beschreiben die Höhenwinkel $\theta_1$ und $\theta_2$ eine Lage des Objektes 5 gegenüber den Abstandssensoren 1, 6 in vertikaler Richtung. Die Höhenwinkel $\theta_1$ und $\theta_2$ beschreiben daher auch, in welcher Höhe das Objekt 5 sich oberhalb oder unterhalb der vorgegeben Höhe 11 über der ersten Sensorebene befindet.

Da der erste Winkel $\varphi_1$' und der zweite Winkel $\varphi_2$' und die Abstände $r_1$ und $r_2$ von den beiden Abstandssensoren 1, 6 erfasst werden, kann das globale Gleichungssystem aufgelöst werden, und die Höhenwinkel $\theta_1$ und $\theta_2$ können bestimmt werden. In alternativen Ausführungsformen der Erfindung erfolgt daher durch die Auswerteeinheit 10 ein mathematisches Auflösen des globalen Gleichungssystems, um damit basierend auf dem ersten Abstand 4, dem zweiten Abstand 9, dem ersten Winkel $\varphi_1$' und dem zweiten Winkel $\varphi_2$' zu bestimmen, ob das Objekt 5 sich oberhalb oder unterhalb einer vorgegeben Höhe 11 über der ersten Sensorebene 2 befindet.

In dieser ersten Ausführungsform erfolgt jedoch ein Errechnen des ersten Vergleichswerts oder des zweiten Vergleichswerts. Die Vergleichswerte beschreiben einen Wert für den zweiten Abstand 9 oder den zweiten Winkel $\varphi_2$', wenn das Objekt 5 sich in einer vorgegebenen Höhe 11 über der ersten Sensorebene 2 befindet. Solche Werte für den zweiten Abstand 9 oder den zweiten Winkel $\varphi_2$' können basierend auf dem globale Gleichungssystem ermittelt werde, wobei für die Höhenwinkel $\theta_1$ und $\theta_2$ solche Werte angenommen werden, die sich ergeben, wenn das Objekt 5 sich in einer vorgegebene Höhe 11 befindet.

So wird in dieser ersten Ausführungsform der erste und der zweite Vergleichswert kontinuierlich neu berechnet. Alternativ werden die Berechnungen vorab für unterschiedliche Messwertkombinationen der Abstandssensoren 1, 6 ausgeführt und gespeichert. In diesem Falle kann der erste oder der zweite Vergleichswert aus einer Tabelle abgerufen werden. Der für aktuell erfasste Messwerte ermittelte erste Vergleichswert wird mit dem zweiten Abstand 9 verglichen. Ist der erste Vergleichswert gleich dem zweiten Abstand 9, so wird bestimmt, dass das Objekt 5 sich in der vorgegebenen Höhe 11 über der ersten Sensorebene 2 befindet. Der für aktuell erfasste Messwerte ermittelte zweite Vergleichswert wird mit dem zweiten Winkel $\varphi_2$' verglichen. Ist der zweite Vergleichswert gleich dem zweiten Winkel $\varphi_2$', so befindet sich das Objekt 5 in der vorgegebenen Höhe 11 über der ersten Sensorebene 2.

Wie bereits beschrieben, sind die erste Sensorachse 3 und die zweite Sensorachse 8 zueinander verkippt. Dies ist erforderlich, um basierend auf dem zuvor beschriebenen mathematischen Prinzip zu bestimmen, ob das Objekt 5 sich in der vorgegebenen Höhe 11 über der ersten Sensorebene 2 befindet. Sind die erste Sensorachse 3 und die zweite Sensorachse 8 nicht zueinander verkippt, so kann es zu Situationen kommen, in denen nicht eindeutig unterschieden werden kann, ob sich das Objekt 5 oberhalb oder unterhalb der vorgegebenen Höhe 11 befindet.

In Figur 6 ist der erste Abstandssensor 1 dargestellt. Dabei sind links neben dem ersten Abstandssensor 1 mögliche Aufenthaltsorte 15, 16, 17, 18, 19 für das Objekt 5 dargestellt, welche sich ergeben, wenn ein bestimmter Wert für den ersten Winkel $\varphi_1$' erfasst wurde und ein bestimmter Wert für den ersten Abstand 4 erfasst wurde. Die möglichen Aufenthaltsorte 15, 16, 17, 18, 19 sind als Punkte auf einer Kreislinie 14 dargestellt. Es versteht sich, dass jeder Punkt auf der Kreislinie 14 ein möglicher Aufenthaltspunkt ist, jedoch nur einige der Aufenthaltspunkte beispielhaft dargestellt sind. Jeder der möglichen Aufenthaltsorte 15, 16, 17, 18, 19 auf der Kreislinie 14 weist denselben Abstand 4 gegenüber dem ersten Abstandssensor 1 auf.

Der erste Winkel $\varphi_1$' ist ein Winkel, welcher eine Lage des Objektes 5 beschreibt, wenn dieses in der ersten Sensorebene 2 liegt. Das Objekt 5 liegt jedoch nicht zwingend in der ersten Sensorebene 2. Bewegt sich das Objekt 5 aus der ersten Sensorebene 2 heraus, so wird dennoch der erste Winkel $\varphi_1$' von dem ersten Abstandssensor 1 ausgegeben. Lediglich wenn das Objekt 5 in der ersten Sensorebene 2 liegt ergibt sich, dass der erste Winkel $\varphi_1$' dem in Figur 4 gezeigten Winkel $\varphi$ entspricht.

Ausgehend von dem ersten Abstand 4 und den Winkeln $\varphi_1$', welche von dem ersten Abstandssensor 1 erfasst wurden, könnte das Objekt 5 somit irgendwo auf ersten Kreisbahn 14 liegen.

Würde zwischen der ersten Sensorachse 3 und der zweiten Sensorachse 8 nun ein Winkel von 0° vorliegen, so tritt eine Situation auf, in welcher die durch die Messwerte des Abstandssensors 1 definierten möglichen Aufenthaltsorte des Objektes 5 exakt auf die durch den zweiten Abstandssensor 6 definierten möglichen Aufenthaltsorte des Objektes 5 fallen. Mit anderen Worten bedeutet dies, dass eine Kreisbahn, welche die möglichen Aufenthaltsort 15 bis 19 gegenüber dem ersten Abstandssensor 1 definiert, also die erste Kreisbahn 14, auf eine Kreisbahn fällt, beispielsweise eine zweite Kreisbahn 20, welche mögliche Aufenthaltsorte des Objektes 5 gegenüber dem zweiten Abstandssensor 6 definiert. Der zuvor beschriebene Fall kann für alle Positionen des Objektes 5 auftreten.

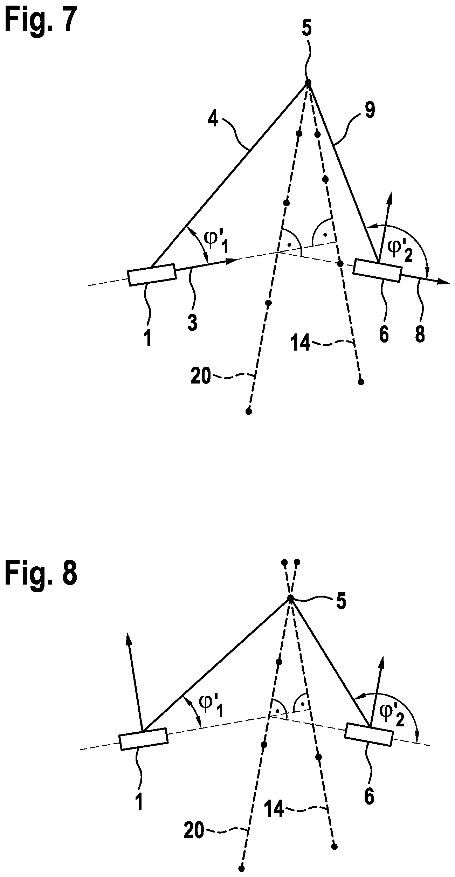

Der erste Abstandssensor 1 ist jedoch gegenüber dem zweiten Abstandssensor 6 verkippt. Es liegt somit ein Winkel von mehr als 0° zwischen der ersten Sensorachse 3 und der zweiten Sensorachse 8 vor. Dies ist beispielhaft in Figur 7 und in Figur 8 dargestellt. Dabei beschreibt Figur 7 eine Situation, in der das Objekt 5 in der ersten Sensorebene 2 liegt. Figur 8 beschreibt eine Situation, in der das Objekt 5 außerhalb der ersten Sensorebene 2 liegt.

In Figur 7 ist ersichtlich, dass durch den ersten Abstandssensor 1 mögliche Aufenthaltsorte des Objektes 5 definiert werden. Diese sind durch die erste Kreisbahn 14 definiert, welche in Figur 8 in einer Draufsicht dargestellt ist, da diese senkrecht zu der ersten Sensorebene 2 steht. Entsprechend werden mögliche Aufenthaltsorte des Objektes 5 durch den zweiten Abstandssensor 6 definiert. Diese liegen in entsprechender Weise auf der zweiten Kreisbahn 20. Da die Sensorachsen 3, 8 des ersten Abstandssensors 1 und des zweiten Abstandssensors 6 zueinander verkippt sind, also nicht parallel oder identisch sind, können somit auch die erste Kreisbahn 14 und die zweite Kreisbahn 20 nicht mehr aufeinander fallen. Es ergibt sich somit genau ein Schnittpunkt zwischen der ersten Kreisbahn 14 und der zweiten Kreisbahn 20, wenn das Objekt 5 in der Sensorebene 2 liegt. Es ist somit für einen bestimmten Wert für den zweiten Abstand 9 eindeutig bestimmt, ob das Objekt 5 in der ersten Sensorebene 2 liegt, oder nicht.

Betrachtet man Figur 8, so ist ersichtlich, dass es für einen Fall, in dem das Objekt 5 außerhalb der ersten Sensorebene 2 liegt, zu zwei Schnittpunkten zwischen der ersten Kreislinie 14 und der zweiten Kreislinie 20 kommt. Es kann somit nicht unterschieden werden, ob ein Objekt 5 oberhalb oder unterhalb der ersten Sensorebene 2 liegt. Trotzdem kann errechnet werden, an welcher Stelle die erste Kreislinie 14 und die zweite Kreislinie 20 einander schneiden und somit ein Abstand zu der ersten Sensorebene 2 verifiziert werden.

Da die dazu notwendigen Berechnungen, welche von der Auswerteeinheit 10 auszuführen wären, sehr aufwendig sein können, ist es vorteilhaft, den Vergleichswert basierend auf einer Tabelle zu ermitteln, in welcher dem ersten Abstand 4 und dem ersten Winkel $\varphi_1$' jeweils ein Vergleichswert zugeordnet ist. Eine solche Tabelle kann vorab errechnet werden. Entsprechend können Schwellenwerte für Ausgangssignale des zweiten Abstandssensors 6 festgelegt werden und über einen analogen Vergleich bestimmt werden, ob ein hohes oder ein niedriges Objekt 5 erfasst wurde.

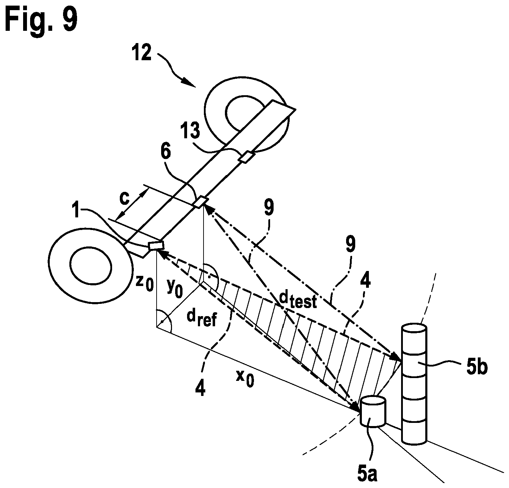

Um zu bestimmen, ob das Objekt 5 sich oberhalb oder unterhalb der ersten oder zweiten Sensorebene 2, 7 befindet, wird in alternativen Ausführungsformen von der Auswerteeinheit ein von einem dritten Abstandssensor 13 erfasster dritter Abstand und/oder eines von einem dritten Abstandssensor erfasster dritter Winkel ausgewertet. Eine beispielhafte Anordnung des dritten Abstandssensors 13 ist in Figur 9 dargestellt. Der dritte Abstandssensor 13 weist dabei eine in einer dritten Sensorebene gelegene dritte Sensorachse auf, wobei die dritte Sensorebene ungleich der ersten Sensorebene 2 und zweiten Sensorebene 7 ist. Der dritten Abstandssensor 13 erfasst den dritten Abstand zwischen dem dritten Abstandssensor 13 und dem Objekt 5 und den dritten Winkel, der in der dritten Sensorebene 7 liegt und einen Winkel zwischen der dritten Sensorachse und einer Richtung beschreibt, in der das Objekt 5 von dem dritten Abstandssensor aus gelegen ist. Das zuvor beschriebene Gleichungssystem wird dazu entsprechend erweitert und ausgewertet.

Durch den dritten Abstandssensor 13 kann alternativ oder zusätzlich eine Validierung erfolgen, ob das Objekt 5 sich tatsächlich oberhalb oder unterhalb der vorgegeben Höhe 11 über der ersten Sensorebene 2 befindet. Das zuvor beschriebene Gleichungssystem wird dazu entsprechend erweitert und ausgewertet. Dabei ist es nicht notwendig, dass eine Sensorebene des dritten Abstandssensors 13 ungleich der ersten Sensorebene 2 und zweiten Sensorebene 7 ist.

Dieses Verfahren kann somit problemlos auf mehr als zwei Abstandssensoren erweitert werden. Mit einem Abstandssensor wird eine Referenzmessung durchgeführt. Alle weiteren Sensoren messen Abstand und horizontalen Winkel. Es wird untersucht, zu welcher Objekthöhe die gemessenen weiteren Sensorwerte besser passen. Stehen mehrere Sensoren zur Verfügung, kann stets der optimale Sensor zur Referenzmessung verwendet werden.

**Patentansprüche**

**1.** Vorrichtung zum Erkennen einer Position eines Objektes (5), umfassend:

- einen ersten Abstandssensor (1), welcher eine in einer ersten Sensorebene (2) gelegene erste Sensorachse (3) aufweist, und dazu eingerichtet ist,

• einen ersten Abstand (4) zwischen dem ersten Abstandssensor (1) und einem Objekt (5) zu erfassen und
• einen ersten Winkel ($\varphi_1$') zu erfassen, der einen Winkel zwischen der ersten Sensorachse (3) und einer Richtung beschreibt, in der das Objekt (5) von dem ersten Abstandssensor (1) aus gelegen ist, wenn das Objekt (5) in der ersten Sensorebene (2) liegt,

- einen zweiten Abstandssensor (6), welcher eine in einer zweiten Sensorebene (7) gelegene zweite Sensorachse (8) aufweist, und dazu eingerichtet ist,

• einen zweiten Abstand (9) zwischen dem zweiten Abstandssensor (6) und dem Objekt (5) zu erfassen, und/oder
• einen zweiten Winkel ($\varphi_2$') zu erfassen, der einen Winkel zwischen der zweiten Sensorachse (8) und einer Richtung beschreibt, in der das Objekt (5) von dem zweiten Abstandssensor (6) aus gelegen ist, wenn das Objekt (5) in der zweiten Sensorebene (7) liegt,
wobei zwischen der ersten Sensorachse (3) und der zweiten Sensorachse (8) ein Winkel von mehr als Null Grad vorliegt, **gekennzeichnet durch** eine Auswerteeinheit (10), welche dazu eingerichtet ist,
• basierend auf dem ersten Abstand (4), dem ersten Winkel ($\varphi_1$') und zumindest dem zweiten Abstand (9) und/oder dem zweiten Winkel ($\varphi_2$') zu bestimmen, ob das Objekt (5) sich oberhalb oder unterhalb einer vorgegeben Höhe (11) über der ersten Sensorebene (2) befindet.

2. Vorrichtung zum Erkennen einer Position eines Objektes (5) gemäß Anspruch 1, **dadurch gekennzeichnet, dass** die Auswerteeinheit (10) dazu eingerichtet ist:

• basierend auf dem ersten Abstand (4) und dem ersten Winkel ($\varphi_1$') einen ersten Vergleichswert zu errechnen, welcher einen Wert beschreibt, der dem zweiten Abstand (9) entspricht, wenn das Objekt (5) sich in einer vorgegebene Höhe (11) über der ersten Sensorebene (2) befindet, und einen Vergleich zwischen dem zweiten Abstand (9) mit dem ersten Vergleichswert auszuführen, um zu bestimmen, ob das Objekt (5) sich oberhalb oder unterhalb der vorgegeben Höhe (11) über der ersten Sensorebene (2) befindet, oder
• basierend auf dem ersten Abstand (4) und dem ersten Winkel ($\varphi_1$') einen zweiten Vergleichswert zu errechnen, welcher einen Wert beschreibt, der dem zweiten Winkel ($\varphi_2$') entspricht, wenn das Objekt (5) sich in einer vorgegebene Höhe (11) über der ersten Sensorebene (2) befindet, und einen Vergleich zwischen dem zweiten Winkel ($\varphi_2$') mit dem zweiten Vergleichswert auszuführen, um zu bestimmen, ob das Objekt (5) sich oberhalb oder unterhalb der vorgegebenen Höhe (11) über der ersten Sensorebene (2) befindet.

3. Vorrichtung zum Erkennen einer Position eines Objektes (5) gemäß Anspruch 2, **dadurch gekennzeichnet, dass** der erste Vergleichswert basierend auf dem ersten Abstand (4), dem ersten Winkel ($\varphi_1$') und dem zweiten Winkel ($\varphi_2$') berechnet wird und der zweite Vergleichswert basierend auf dem ersten Abstand (4), dem zweiten Abstand (9) und dem ersten Winkel ($\varphi_1$') berechnet wird.

4. Vorrichtung zum Erkennen einer Position eines Objektes (5) gemäß einem der vorherigen Ansprüche, **dadurch gekennzeichnet, dass** die erste Sensorebene (2) und die zweite Sensorebene (7) parallele oder identische Ebenen sind.

5. Vorrichtung zum Erkennen einer Position eines Objektes (5) gemäß einem der vorherigen Ansprüche, **dadurch gekennzeichnet, dass** die erste Sensorebene (2) und/oder die zweite Sensorebene (7) horizontale Ebenen sind.

6. Vorrichtung zum Erkennen einer Position eines Objektes (5) gemäß einem der vorherigen Ansprüche, ferner umfassend einen dritten Abstandssensor (13), welcher eine in einer dritten Sensorebene gelegene dritte Sensorachse aufweist, und dazu eingerichtet ist, einen dritten Abstand zwischen dem dritten Abstandssensor (13) und dem Objekt (5) zu erfassen, wobei die Auswerteeinheit (10) dazu eingerichtet ist, basierend auf dem dritten Abstand zu validieren, ob korrekt bestimmt wurde, ob das Objekt (5) sich oberhalb oder unterhalb der vorgegeben Höhe (11) über der ersten Sensorebene (2) befindet.

7. Vorrichtung zum Erkennen einer Position eines Objektes (5) gemäß einem der vorherigen Ansprüche, ferner umfassend einen dritten Abstandssensor (13), welcher eine in einer dritten Sensorebene gelegene dritte Sensorachse aufweist, wobei die dritte Sensorebene ungleich der ersten Sensorebene und zweiten Sensorebene ist, und dazu eingerichtet ist, einen dritten Abstand zwischen dem dritten Abstandssensor (13) und dem Objekt (5) zu erfassen, und/oder einen dritten Winkel zu erfassen, der in der dritten Sensorebene (7) liegt und einen Winkel zwischen der dritten Sensorachse und einer Richtung beschreibt, in der das Objekt (5) von dem dritten Abstandssensor (13) aus gelegen ist, wobei die Auswerteeinheit (10) dazu eingerichtet ist, basierend auf dem dritten Abstand und oder dem dritten Winkel zu ermitteln, ob das Objekt (5) sich oberhalb oder unterhalb der ersten oder zweiten Sensorebene (2, 7) befindet.

8. Vorrichtung zum Erkennen einer Position eines Objektes (5) gemäß einem der vorherigen Ansprüche, **dadurch gekennzeichnet, dass** der erste und zweite Vergleichswert basierend auf einer Tabelle ermittelt wird.

9. Vorrichtung zum Erkennen einer Position eines Objektes (5) gemäß einem der vorherigen Ansprüche, **dadurch gekennzeichnet, dass** der erste und zweite Vergleichswert ferner basierend auf einem vordefinierten Abstand (c) zwischen dem ersten Abstandssensor (1) und dem zweiten Abstandssensor (6) ermittelt wird.

10. Vorrichtung zum Erkennen einer Position eines Objektes (5) gemäß einem der vorherigen Ansprüche, **dadurch gekennzeichnet, dass** der erste Abstandssensor (1) und/oder der zweite Abstandssensor (6) ein Radarsensor, ein akustischer Sensor oder ein optischer Sensor ist.

11. Verfahren zum Erkennen einer Position eines Objektes (5) mittels eines ersten Abstandssensors (1), welcher eine in einer ersten Sensorebene (2) gelegene erste Sensorachse (3) aufweist und eines zweiten Abstandssensors (6), welcher eine in einer zweiten Sensorebene (7) gelegene zweite Sensorachse (8) aufweist, wobei zwischen der ersten Sensorachse (3) und zweiten Sensorachse (8) ein Winkel von mehr als Null Grad vorliegt, umfassend:

   - Erfassen einen ersten Abstands (4) zwischen dem ersten Abstandssensor (1) und einem Objekt (5)
   - Erfassen eines ersten Winkels ($\varphi1'$), der einen Winkel zwischen der ersten Sensorachse (3) und einer Richtung beschreibt, in der das Objekt (5) von dem ersten Abstandssensor (1) aus gelegen ist, wenn das Objekt (5) in der ersten Sensorebene (2) liegt,
   - Erfassen eines zweiten Abstands (9) zwischen dem zweiten Abstandssensor (6) und dem Objekt (5), und/oder eines zweiten Winkels ($\varphi2'$), der einen Winkel zwischen der zweiten Sensorachse (8) und einer Richtung beschreibt, in der das Objekt (5) von dem zweiten Abstandssensor (6) aus gelegen ist, wenn das Objekt (5) in der zweiten Sensorebene (7) liegt, **gekennzeichnet durch** Bestimmen, basierend auf dem ersten Abstand (4), dem ersten Winkel ($\varphi1'$) und zumindest dem zweiten Abstand (9) und/oder dem zweiten Winkel ($\varphi2'$), ob das Objekt (5) sich oberhalb oder unterhalb einer vorgegebenen Höhe (11) über der ersten Sensorebene (2) befindet.

**Claims**

1. Apparatus for detecting a position of an object (5), comprising:

   - a first distance sensor (1), which has a first sensor axis (3) situated in a first sensor plane (2) and is configured for

     • capturing a first distance (4) between the first distance sensor (1) and an object (5), and
     • capturing a first angle ($\varphi_1'$) describing an angle between the first sensor axis (3) and a direction in which the object (5) is situated, starting from the first distance sensor (1), if the object (5) lies in the first sensor plane (2),

   - a second distance sensor (6), which has a second sensor axis (8) situated in a second sensor plane (7) and is configured for

     • capturing a second distance (9) between the second distance sensor (6) and the object (5), and/or
     • capturing a second angle (($\varphi_2'$) describing an angle between the second sensor axis (8) and a direction in which the object (5) is located, starting from the second distance sensor (6), if the object (5) lies in the second sensor plane (7),
     wherein an angle of more than zero degrees exists between the first sensor axis (3) and the second sensor axis (8), **characterized by**
     an evaluation unit (10), which is configured for
     • determining, based on the first distance (4), the first angle ($\varphi_1'$) and at least the second distance (9) and/or the second angle ($\varphi_2'$), whether the object (5) is located above or below a specified height (11) above the first sensor plane (2).

2. Apparatus for detecting a position of an object (5) according to Claim 1, **characterized in that** the evaluation unit (10) is configured for:

> • calculating, based on the first distance (4) and the first angle ($\varphi_1$'), a first comparison value describing a value that corresponds to the second distance (9) if the object (5) is located at a specified height (11) above the first sensor plane (2), and carrying out a comparison between the second distance (9) and the first comparison value to determine whether the object (5) is located above or below the specified height (11) above the first sensor plane (2), or
>
> • calculating, based on the first distance (4) and the first angle ($\varphi_1$'), a second comparison value describing a value that corresponds to the second angle ($\varphi_2$') if the object (5) is located at a specified height (11) above the first sensor plane (2), and carrying out a comparison between the second angle ($\varphi_2$') and the second comparison value to determine whether the object (5) is located above or below the specified height (11) above the first sensor plane (2).

3. Apparatus for detecting a position of an object (5) according to Claim 2, **characterized in that** the first comparison value is calculated based on the first distance (4), the first angle ($\varphi_1$') and the second angle ($\varphi_2$'), and the second comparison value is calculated based on the first distance (4), the second distance (9) and the first angle (($\varphi_1$').

4. Apparatus for detecting a position of an object (5) according to one of the preceding claims, **characterized in that** the first sensor plane (2) and the second sensor plane (7) are parallel or identical planes.

5. Apparatus for detecting a position of an object (5) according to one of the preceding claims, **characterized in that** the first sensor plane (2) and/or the second sensor plane (7) are horizontal planes.

6. Apparatus for detecting a position of an object (5) according to one of the preceding claims, furthermore comprising a third distance sensor (13), which has a third sensor axis situated in a third sensor plane and is configured for capturing a third distance between the third distance sensor (13) and the object (5), wherein the evaluation unit (10) is configured for validating, based on the third distance, whether the determination of whether the object (5) is located above or below the specified height (11) above the first sensor plane (2) was correct.

7. Apparatus for detecting a position of an object (5) according to one of the preceding claims, further comprising a third distance sensor (13), which has a third sensor axis situated in a third sensor plane, wherein the third sensor plane is not the same as the first sensor plane and second sensor plane, and is configured for capturing a third distance between the third distance sensor (13) and the object (5), and/or capturing a third angle, which lies in the third sensor plane (7) and describes an angle between the third sensor axis and a direction in which the object (5) is situated, starting from the third distance sensor (13), wherein the evaluation unit (10) is configured for ascertaining, based on the third distance and/or the third angle, whether the object (5) is located above or below the first or second sensor plane (2, 7).

8. Apparatus for detecting a position of an object (5) according to one of the preceding claims, **characterized in that** the first and second comparison values are ascertained based on a table.

9. Apparatus for detecting a position of an object (5) according to one of the preceding claims, **characterized in that** the first and second comparison values are furthermore ascertained based on a predefined distance (c) between the first distance sensor (1) and the second distance sensor (6).

10. Apparatus for detecting a position of an object (5) according to one of the preceding claims, **characterized in that** the first distance sensor (1) and/or the second distance sensor (6) is a radar sensor, an acoustic sensor or an optical sensor.

11. Method for detecting a position of an object (5) by means of a first distance sensor (1), which has a first sensor axis (3) situated in a first sensor plane (2), and a second distance sensor (6), which has a second sensor axis (8) situated in a second sensor plane (7), wherein an angle of more than zero degrees exists between the first sensor axis (3) and the second sensor axis (8), comprising:

> - capturing a first distance (4) between the first distance sensor (1) and an object (5),
> - capturing a first angle ($\varphi_1$') describing an angle between the first sensor axis (3) and a direction in which the object (5) is situated, starting from the first distance sensor (1), if the object (5) lies in the first sensor plane (2),
> - capturing a second distance (9) between the second distance sensor (6) and the object (5), and/or a second

angle (($\varphi_2$')) describing an angle between the second sensor axis (8) and a direction in which the object (5) is situated, starting from the second distance sensor (6), if the object (5) lies in the second sensor plane (7), **characterized by**

determining, based on the first distance (4), the first angle ($\varphi_1$') and at least the second distance (9) and/or the second angle (($\varphi_2$')), whether the object (5) is located above or below a specified height (11) above the first sensor plane (2).

**Revendications**

1. Dispositif permettant de reconnaître une position d'un objet (5), comprenant :

   - un premier capteur de distance (1) qui présente un premier axe de capteur (3) situé dans un premier plan de capteur (2), et qui est aménagé pour

     • détecter une première distance (4) entre le premier capteur de distance (1) et un objet (5), et
     • détecter un premier angle ($\varphi_1$') qui décrit un angle entre le premier axe de capteur (3) et une direction dans laquelle l'objet (5) est situé par rapport au premier capteur de distance (1) si l'objet (5) est situé dans le premier plan de capteur (2),

   - un deuxième capteur de distance (6) qui présente un deuxième axe de capteur (8) situé dans un deuxième plan de capteur (7), et qui est aménagé pour

     • détecter une deuxième distance (9) entre le deuxième capteur de distance (6) et l'objet (5), et/ou
     • détecter un deuxième angle ($\varphi_2$') qui décrit un angle entre le deuxième axe de capteur (8) et une direction dans laquelle l'objet (5) est situé par rapport au deuxième capteur de distance (6) si l'objet (5) est situé dans le deuxième plan de capteur (7),
     un angle supérieur à zéro degré étant présent entre le premier axe de capteur (3) et le deuxième axe de capteur (8),
     **caractérisé par** une unité d'évaluation (10) qui est aménagée pour
     • sur la base de la première distance (4), du premier angle ($\varphi_1$') et au moins de la deuxième distance (9) et/ou du deuxième angle (($\varphi_2$')), déterminer si l'objet (5) est situé au-dessus ou au-dessous d'une hauteur prédéfinie (11) au-dessus du premier plan de capteur (2).

2. Dispositif permettant de reconnaître une position d'un objet (5) selon la revendication 1, **caractérisé en ce que** l'unité d'évaluation (10) est aménagée pour :

   • sur la base de la première distance (4) et du premier angle ($\varphi_1$'), calculer une première valeur de comparaison qui décrit une valeur qui correspond à la deuxième distance (9) si l'objet (5) est situé à une hauteur prédéfinie (11) au-dessus du premier plan de capteur (2), et procéder à une comparaison entre la deuxième distance (9) et la première valeur de comparaison afin de déterminer si l'objet (5) est situé au-dessus ou au-dessous de la hauteur prédéfinie (11) au-dessus du premier plan de capteur (2), ou
   • sur la base de la première distance (4) et du premier angle ($\varphi_1$'), calculer une deuxième valeur de comparaison qui décrit une valeur qui correspond au deuxième angle ($\varphi_2$') si l'objet (5) est situé à une hauteur prédéfinie (11) au-dessus du premier plan de capteur (2), et procéder à une comparaison entre le deuxième angle ($\varphi_2$') et la deuxième valeur de comparaison afin de déterminer si l'objet (5) est situé au-dessus ou au-dessous de la hauteur prédéfinie (11) au-dessus du premier plan de capteur (2).

3. Dispositif permettant de reconnaître une position d'un objet (5) selon la revendication 2, **caractérisé en ce que** la première valeur de comparaison est calculée sur la base de la première distance (4), du premier angle ($\varphi_1$') et du deuxième angle (($\varphi_2$')), et la deuxième valeur de comparaison est calculée sur la base de la première distance (4), de la deuxième distance (9) et du premier angle ($\varphi_1$').

4. Dispositif permettant de reconnaître une position d'un objet (5) selon l'une quelconque des revendications précédentes, **caractérisé en ce que** le premier plan de capteur (2) et le deuxième plan de capteur (7) sont des plans parallèles et identiques.

**5.** Dispositif permettant de reconnaître une position d'un objet (5) selon l'une quelconque des revendications précédentes, **caractérisé en ce que** le premier plan de capteur (2) et/ou le deuxième plan de capteur (7) sont des plans horizontaux.

**6.** Dispositif permettant de reconnaître une position d'un objet (5) selon l'une quelconque des revendications précédentes, comprenant en outre un troisième capteur de distance (13) qui présente un troisième axe de capteur situé dans un troisième plan de capteur, et qui est aménagé pour détecter une troisième distance entre le troisième capteur de distance (13) et l'objet (5), l'unité d'évaluation (10) étant aménagée pour valider sur la base de la troisième distance qu'il a été déterminé correctement si l'objet (5) est situé au-dessus ou au-dessous de la hauteur prédéfinie (11) au-dessus du premier plan de capteur (2).

**7.** Dispositif permettant de reconnaître une position d'un objet (5) selon l'une quelconque des revendications précédentes, comprenant en outre un troisième capteur de distance (13) qui présente un troisième axe de capteur situé dans un troisième plan de capteur, le troisième plan de capteur étant différent du premier plan de capteur et du deuxième plan de capteur, et qui est aménagé pour détecter une troisième distance entre le troisième capteur de distance (13) et l'objet (5), et/ou détecter un troisième angle qui est situé dans le troisième plan de capteur (7) et décrit un angle entre le troisième axe de capteur et une direction dans laquelle l'objet (5) est situé par rapport au troisième capteur de distance (13), l'unité d'évaluation (10) étant aménagée pour établir sur la base de la troisième distance et/ou du troisième angle si l'objet (5) est situé au-dessus ou au-dessous du premier ou deuxième plan de capteur (2, 7).

**8.** Dispositif permettant de reconnaître une position d'un objet (5) selon l'une quelconque des revendications précédentes, **caractérisé en ce que** la première et la deuxième valeur de comparaison sont établies sur la base d'un tableau.

**9.** Dispositif permettant de reconnaître une position d'un objet (5) selon l'une quelconque des revendications précédentes, **caractérisé en ce que** la première et la deuxième valeur de comparaison sont en outre établies sur la base d'une distance prédéfinie (c) entre le premier capteur de distance (1) et le deuxième capteur de distance (6).

**10.** Dispositif permettant de reconnaître une position d'un objet (5) selon l'une quelconque des revendications précédentes, **caractérisé en ce que** le premier capteur de distance (1) et/ou le deuxième capteur de distance (6) sont des capteurs radar, des capteurs acoustiques ou des capteurs optiques.

**11.** Procédé permettant de reconnaître une position d'un objet (5) au moyen d'un premier capteur de distance (1) qui présente un premier axe de capteur (3) situé dans un premier plan de capteur (2) et d'un deuxième capteur de distance (6) qui présente un deuxième axe de capteur (8) situé dans un deuxième plan de capteur (7), un angle supérieur à zéro degré étant présent entre le premier axe de capteur (3) et le deuxième axe de capteur (8), comprenant les étapes consistant à :

- détecter une première distance (4) entre le premier capteur de distance (1) et un objet (5),
- détecter un premier angle ($\varphi_1$') qui décrit un angle entre le premier axe de capteur (3) et une direction dans laquelle l'objet (5) est situé par rapport au premier capteur de distance (1) si l'objet (5) est situé dans le premier plan de capteur (2),
- détecter une deuxième distance (9) entre le deuxième capteur de distance (6) et l'objet (5) et/ou un deuxième angle ($\varphi_2$') qui décrit un angle entre le deuxième axe de capteur (8) et une direction dans laquelle l'objet (5) est situé par rapport au deuxième capteur de distance (6) si l'objet (5) est situé dans le deuxième plan de capteur (7),

**caractérisé par** la détermination, sur la base de la première distance (4), du premier angle ($\varphi_1$') et d'au moins la deuxième distance (9) et/ou du deuxième angle ($\varphi_2$'), si l'objet (5) est situé au-dessus ou au-dessous d'une hauteur prédéfinie (11) au-dessus du premier plan de capteur (2).

# Fig. 1

# Fig. 2

# Fig. 3

# Fig. 4

# Fig. 5

# Fig. 6

# Fig. 7

# Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010253596 A